# EUROPEAN PATENT APPLICATION

(11) **EP 2 334 018 A1**
(43) Date of publication of application: **15.06.2011**
(21) Application number: 09815569.0
(22) Date of filing: 26.05.2009
(51) Int. Cl.: H04L 12/56

(54) **SERVICE SELECTION METHOD, DEVICE AND SYSTEM**

(30) Priority: 23.09.2008 CN 200810222933
(71) Applicant: Huawei Technologies Co., Ltd., Longgang District, Shenzhen Guangdong 518129 (CN)
(72) Inventor: ZHENG, Bo, Longgang District 518129, Shenzhen (CN); CHEN, Pu, Longgang District 518129, Shenzhen (CN); JIANG, Wujun, Longgang District 518129, Shenzhen (CN); HU, Feiran, Longgang District 518129, Shenzhen (CN); XIAO, Dan, Longgang District 518129, Shenzhen (CN); LU, Jincao, Longgang District 518129, Shenzhen (CN)
(74) Representative: Kreuz, Georg Maria
(86) International application number: PCT/CN2009/071987
(87) International publication number: WO 2010/034199

(57) **Abstract**

A method, an apparatus, and a system for selecting a service are disclosed. The method is applied in an Open Service Architecture (OSA), and includes: receiving a service invoking request message sent by an external application; obtaining, according to the service information, policy information corresponding to the service to be invoked; and selecting, according to the policy information, a service provision entity to invoke the service. An open service entity is applied in an OSA and includes a receiving module, an obtaining module, and a selecting module. A policy provision entity is applied in an OSA, and includes a providing module. A service selection system is applied in an OSA and includes an open service entity and a policy provision entity. With the present invention, a proper service is selected for the external application according to the policy, and the services of the communication network are invoked more conveniently and accurately.

## Description

This application claims priority to Chinese Patent Application No. 200810222933.X, filed with the Chinese Patent Office on September 23, 2008 and entitled "Method, Apparatus and System for Selecting Service", which is incorporated herein by reference in its entirety.

### Field of the Invention

The present invention relates to communication technologies, and in particular, to a method, an apparatus, and a system for selecting a service.

### Background of the Invention

With the development and maturity of packet technologies, the telecom network evolves from the traditional circuit switched network to a broadband packet switched network. In the evolution from circuit switching to soft-switching, and from soft-switching to IP Multimedia Subsystem (IMS), the telecom network has absorbed many excellent IT technologies such as the Internet Protocol (IP) technologies, distributed networking technologies, and Session Initiation Protocol (SIP) technologies. Currently, the convergence of IMS and Internet becomes a focus of research and development. Web services relates to a technology intended to serve different platforms and enable different application systems of different platforms to work collaboratively. The technology has become one of popular topics in the convergence of IMS and Internet. Web services are accessed through an IMS network, and the IMS network can use various services provided by the Web services. However, Web services need to collaborate with various services provided by the IMS to provide integrated services, and the services or capabilities of an IMS network or another communication network need to be opened to a third-party developer by means of Web services, which have attracted a lot of attention and efforts of research in the telecom field currently.

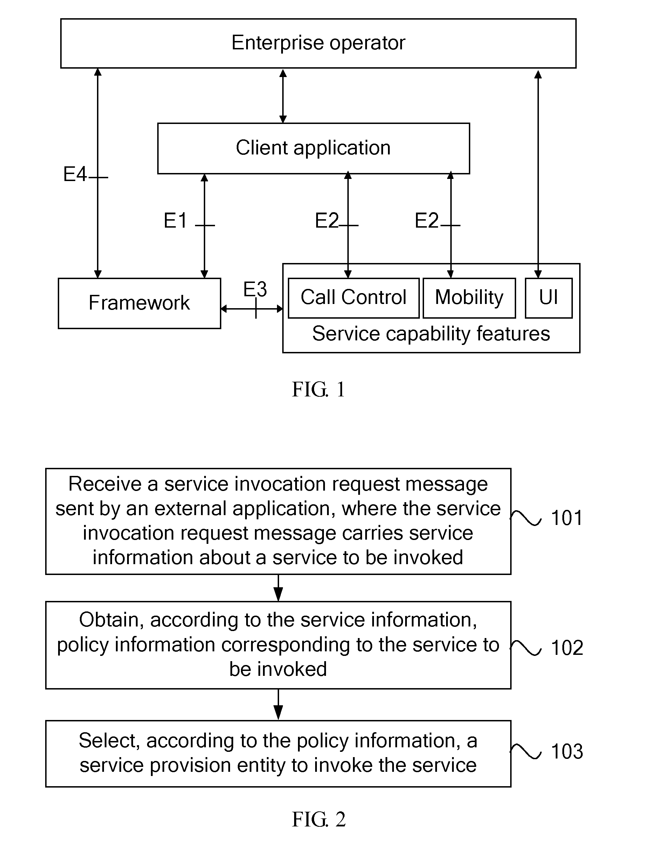

The Open Service Architecture (OSA)/Parlay is an organization that researches on how to open telecom capabilities through a standard Web service interface in the prior art. FIG. 1 is a schematic diagram showing the architecture of an OSA in the prior art. As shown in FIG. 1, the OSA/Parlay defines these interfaces: interface E1 between the client application and the framework, interface E2 between the client application and the service capability feature, interface E3 between the framework and the service capability feature, and interface E4 between the framework and the enterprise operator. Through such open standard Web service interfaces, the services or capabilities of a telecom network can be provided for external applications. However, the OSA/Parlay architecture is set up on the basis of a single network. In practice, different types of networks are generally involved, for example, the IMS network, soft-switching network, and Public Switched Telephone Network (PSTN). Moreover, different operators may provide networks of the same type. In this case, for an external application, multiple service provisions of the same type may exist at the same time. When the external application invokes a specific service, the OSA/Parlay architecture is not capable of selecting a proper service provision for the service invoked by the external application, which brings a lot of unnecessary troubles to the subscriber and deteriorates the reliability and effectiveness of the service. Therefore, the solution to selecting a proper service or capability for an external application is pending.

### Summary of the Invention

The present invention provides a method, an apparatus, and a system for selecting a service, with a view to selecting a proper service for an external application according to a policy and invoking services of a communication network more conveniently and accurately.

According to the first aspect of the present invention a service selection method, being applied in an OSA, includes:
receiving a service invoking request message sent by an external application, where the service invoking request message carries service information about a service to be invoked;
obtaining, according to the service information, policy information corresponding to the service to be invoked; and
selecting, according to the policy information, a service provision entity to invoke the service.

According to the second aspect of the present invention an open service entity, being applied in an OSA, includes:
a receiving module, configured to receive a service invoking request message sent by an external application, where the service invoking request message carries service information about a service to be invoked;
an obtaining module, configured to obtain, according to the service information received by the receiving module, policy information corresponding to the service to be invoked; and
a selecting module, configured to select, according to the policy information obtained by the obtaining module, a service provision entity to invoke the service.

According to the third aspect of the present invention a policy provision entity, being applied in an OSA, includes:
a providing module, configured to provide policy information for an open service entity.

According to the fourth aspect of the present invention a service selection system, being applied in an OSA, includes:
an open service entity, configured to: obtain, from a policy provision entity and according to service information, policy information corresponding to a service to be invoked, select, according to the policy information corresponding to the service to be invoked, a service provision entity, and instruct the service provision entity to invoke the service; and
the policy provision entity, configured to provide the policy information for the open service entity.

With the method, apparatus, and system for selecting a service according to the present invention, the policy information corresponding to the service to be invoked is obtained according to the service information carried in the received service invoking request message, and a service provision entity for invoking the service is selected according to the policy information, and therefore, a proper service is selected for an external application according to the policy, and the services of the communication network are invoked more conveniently and accurately.

### Brief Description of the Drawings

FIG. 1 is a schematic diagram showing the architecture of an OSA in the prior art;
FIG. 2 is a flowchart of a service selection method according to an embodiment of the present invention;
FIG. 3 is a signaling flowchart of a service selection method according to another embodiment of the present invention;
FIG. 4 is a schematic diagram showing a structure of an open service entity according to an embodiment of the present invention;
FIG. 5 is a schematic diagram showing a structure of an open service entity according to another embodiment of the present invention;
FIG. 6 is a schematic diagram showing a structure of an open service entity according to still another embodiment of the present invention;
FIG. 7 is a schematic diagram showing a structure of a policy provision entity according to an embodiment of the present invention;
FIG. 8 is a schematic diagram showing a structure of a policy provision entity according to another embodiment of the present invention; and
FIG. 9 is a schematic diagram showing a structure of a service selection system according to an embodiment of the present invention.

### Detailed Description of the Embodiments

The technical solution under the present invention is detailed below with reference to the accompanying drawings and exemplary embodiments.

FIG. 2 is a flowchart of a service selection method according to an embodiment of the present invention. As shown in FIG. 2, the service selection method includes the following steps:
Step 101: Receive a service invoking request message sent by an external application, wherein the service invoking request message carries service information about a service to be invoked.

When an external application accesses a service or capability of a communication network through Web services, the external application sends a service invoking request message to the open service entity first. The open service entity receives the service invoking request message sent by the external application. The service invoking request message carries service information about the service to be invoked. The external application may be any application that needs to access the open service or capability of the communication network through Web services. The external application may be a device, a system, or an application program, such as a Web page, in a device or system. The open service entity may be an open service functional unit, or an open capability gateway defined by the OSA/Parlay, or a Service Delivery Platform (SDP) defined by the BEA/Oracle, or another device that provides telecom network capabilities or services through an open Web service interface. The service to be invoked may be a service or capability, which is to be invoked, of a communication network. The service invoking request message is a SOAP message compliant with the Web service interface, or a message that takes on a Representation State Transfer (REST) style, for example, an HTTP Get request sent by a subscriber to the Web server when the subscriber browses a Web page. The service information carried in the service invoking request message may be any information about the service to be invoked. For example, when an external application expects to invoke a call service, the service invoking request message sent by the external application to the open service entity carries call service information and identifiers of the calling party and the called party.

Step 102: Obtain, according to the service information, policy information corresponding to the service to be invoked.

After receiving the service invoking request message sent by the external application, the open service entity obtains, according to the service information carried in the request, the policy information corresponding to the service to be invoked. The open service entity may obtain the policy information before invoking the service or at the time of invoking the service. The open service entity may obtain the policy information actively or passively. The policy information may be preset by the policy provision entity. Nevertheless, the policy provision entity may also not preset policy information. Specifically, the policy provision entity may be a policy provision functional unit. In the case that the open service entity obtains the policy information before invoking the service, if the policy information is preset by the policy provision entity, the open service entity may receive the policy information from the policy provision entity passively; if no policy information is preset by the policy provision entity, the open service entity may send a policy request to the policy provision entity to obtain the policy information actively. In the case that the open service entity obtains the policy information at the time of invoking the service, if the policy information is preset by the policy provision entity, the open service entity may receive the policy information from the policy provision entity passively; if no policy information is preset by the policy provision entity, the open service entity may send a policy request to the policy provision entity to obtain the policy information actively.

Policy information includes subscription information of the initiator of the external application, information about the home network of the communication network subscriber involved in the service, and information about differences between service provision entities. That is, the policy information may be subscription information of the initiator of the external application that invokes the service, or service home information of the session parties involved in the service in the communication network, or information about differences between service provision entities, for example, charging information and load information. In the case that the policy information is the subscription information of the initiator of the external application, the open service entity may subscribe to a specific type of service of a specific network (such as a network of a specific operator or a specific type) for the external application that invokes the service. In the case that the policy information is the information about the home network of the communication network subscriber involved in the service, the home network of the session parties may be used as a service provision entity according to the service home information of the session parties involved in the service in the communication network. If the policy information is information about differences between service provision entities, the open service entity may subscribe to the service selected according to the difference information or dynamically specify such a service for the external application, for example, subscribe to the cheapest service or dynamically specify the service with the lightest load. The policy mentioned in this embodiment may be in any of the following forms:
Example 1: Invoke the service provided by XXX, if the initiator of the external application is XXX and the invoked service is XXX;
Example 2: Invoke the service provided by XXX, if the invoked service is XXX and the home domain of the session parties involved in the invoking input parameters is XXX;
Example 3: Invoke the service provided by XXX which involves the cheapest charge in service provision, if the invoked service is XXX;
Example 4: If the initiator of the external application is XXX, the invoked service is XXX, and the history record of the external application invoking this service is "use the service provided by XXX", still invoke the service provided by XXX; or
Example 5: Invoke the service provided by the XXX which involves the lightest load in the service provision, if the invoked service is XXX.

It should be noted that, the policy mentioned in this embodiment includes but is not limited to the above mentioned examples.

The following is an example of creating a session when the external application invokes a call service: If the external application expects to invoke the call service, a call from subscriber A to subscriber B is created, but multiple different networks such as the IMS network and other NGN networks are available for invoking the call service, or multiple networks of the same nature but in different geographic areas are available. With the OSA/Parlay architecture in the prior art, it is impossible to select the network for invoking the service. After the subscriber originates a call, a local call may be changed as a toll call or even an international toll call, which generates extra charges for the subscriber. With the method according to an embodiment of the present invention, the service invoking request message sent by the external application carries the information about the call service to be invoked, the identifier of the calling party, and the identifier of the called party. According to the policy information in Example 2 above, the open service entity may select the home network of subscriber A or subscriber B for providing the call service, and routes the service invoking request message to this network. In this way, the most proper service is selected for the external application to complete the call service. In another example, when the external application invokes a group service, the external application uses the group service to create a group, and then expects to use the group service maintenance function to maintain the group. With the OSA/Parlay architecture in the prior art, no policy is available for selection. At the time of maintaining the group through an open service interface, it is probable that a group service provided by another network is selected, and the service continuity cannot be ensured. With the method provided in this embodiment, however, the open service entity may select the service provision entity that previously invokes the service in view of the history record of invoking the group service of the external application according to the policy information in Example 4 above, thus ensuring the service continuity.

Step 103: Select, according to the policy information, a service provision entity to invoke the service.

After obtaining the policy information corresponding to the service to be invoked, the open service entity selects, according to the policy information, a service provision entity to invoke the service. Although this embodiment supposes that at least two service provision entities corresponding to the service invoked by the external application exist, it should be noted that the technical solution according to embodiments of the present invention is also applicable to the scenario where only one service provision entity exists. In the case that only one service provision entity exists, the open service entity judges, according to the policy information provided by the policy provision entity, whether the service provision entity corresponds to the policy information. If the service provision entity corresponds to the policy information, the open service entity selects this service provision entity to invoke the current service; if the service provision entity does not correspond to the policy information, the open service entity does not select this service provision entity to invoke the service. It is assumed that a call service is invoked. When the external application creates a call between subscriber A and subscriber B, the service invoking request message sent by the external application carries the information about the call service to be invoked, the identifier of the calling party, and the identifier of the called party. The open service entity obtains, according to the service information, the policy information corresponding to the call service. The policy information may be "the invoked service is a call service and the home domain of the session parties involved in the invoking input parameters is the home network of subscriber B". Therefore, the open service entity selects, according to the policy information, the home network of subscriber B for providing the call service, and then routes the service invoking request message to this network. In this way, the call service between subscriber A and subscriber B is invoked.

The following step may also be performed after step 103: Sending a service invoking interface protocol message defined by the service provision entity to the service provision entity, and the service provision entity invokes the service according to the received service invoking interface protocol message. After selecting a service provision entity to invoke a service, the open service entity sends a service invoking interface protocol message to this service provision entity. This message is a message that complies with the service invoking interface protocol of the service provision entity, for example, an HTTP request or a SIP request. According to the received service invoking interface protocol message, the service provision entity selects the corresponding interface, and completes the service invoking process.

In this embodiment, the open service entity obtains, according to the service information carried in the service invoking request message, policy information corresponding to the service to be invoked, and selects, according to the policy information, a service provision entity to invoke the service, and therefore, a proper service is selected for the external application according to the policy, and the services or capabilities of the communication network are invoked more conveniently and accurately.

It can be known from the contents introduced above that, the policy information corresponding to the service to be invoked may be provided by the policy provision entity for the open service entity beforehand, or be requested by the open service entity actively, from the policy provision entity, after the open service entity receives the service invoking request message. That is, the policy information corresponding to the service to be invoked may be obtained by using two methods. The two methods are different in terms of specific operations.

When the open service entity obtains beforehand, according to the policy information provided by the policy provision entity, the policy information corresponding to the service to be invoked, the following step may also be performed before step 101: Loading the policy information preset by the policy provision entity. That is, before the open service entity receives the service invoking request message sent by the external application, the open service entity loads the policy information preset by the policy provision entity, and stores the loaded policy information. After receiving the service invoking request message, the open service entity can retrieve the stored policy information at any time, and select, among the retrieved policy information, the policy information corresponding to the service to be invoked.

The policy provision entity may preset multiple policies for the service to be invoked by the external application. In this case, the above mentioned step 102 may specifically be: obtaining, according to the set priority of policies and the service information, the policy information corresponding to the service to be invoked. The preset information about multiple policies includes the set priority of the policies. After receiving the service invoking request message, the open service entity retrieves the stored policy information corresponding to the service to be invoked. If the policy information includes multiple policies, the open service entity selects, according to the set priority of policies, the service provision entity by applying the policy of the highest priority first. If more than one service provision entity is selected according to the policy of the highest priority, the open service entity applies the policy of the next priority until a unique service provision entity is selected. The call service is still taken as an example here. It is assumed that at the time of selecting the service provision entity according to the home network of subscriber A, multiple service provision entities of the same type (for example, in Shenzhen, the service may be provided by networks of China Telecom, China Mobile, and China Unicom, or even may be provided by different types of networks such as CDMA, GSM, and PSTN) exist in the home network. The open service entity applies the policy of the next priority until a unique service provision entity is selected. For example, the open service entity may select the service provision entity more precisely according to the information about the initiator of the external application or the information about the invoked service.

The open service entity may obtain the policy information by sending a policy request message to the policy provision entity. In this case, step 102 above may specifically be:
Sending a policy request message to the policy provision entity according to the service information, where the policy request message carries invoking information and service information. If multiple service provision entities of the same type are available for invoking the service, and no policy for selection exists in the open service entity, or, if the policy for selection is not related to the currently invoked service, the open service entity sends a policy request to the policy provision entity actively after receiving the service invoking request message. That is, according to the service information carried in the request, the open service entity sends a policy request message to the policy provision entity. The policy request message carries invoking information and service information. The invoking information may be information about the initiator of the external application that invokes this service, or information about the session parties involved in the service.

The open service entity receives a policy response message sent by the policy provision entity. The policy response message carries the policy information corresponding to the service to be invoked. After receiving the policy request message, the policy provision entity responds to the policy request message sent by the open service entity. That is, the policy provision entity selects, according to the invoking information and the service information in the request, a proper policy for the service to be invoked, and then encapsulates the provided policy information into the policy response message sent to the open service entity. The open service entity receives the policy response message returned by the policy provision entity, where the policy response message carries the policy information corresponding to the service to be invoked.

The open service entity obtains the policy information according to the received policy response message. After receiving the policy response message, the open service entity obtains the policy information carried in the policy response message. The policy information may be based on the subscription information of the initiator of the external application, or the service home information of session parties involved in the service in the communication network, or information about differences between service provision entities.

It should be noted that when the open service entity obtains the policy information passively or actively, the policy information may also be obtained at different time. That is, the open service entity may obtain the policy information before the service is invoked or at the time of invoking the service. If the policy provision entity has set the policy information before the open service entity invokes the service, the open service entity applies the first obtaining method mentioned above, namely, receives the policy information from the policy provision entity passively. If the policy provision entity has not set the policy information before the open service entity invokes the service, the open service entity applies the second obtaining method mentioned above, namely, sends a policy request to the policy provision entity to obtain the policy information actively. If the policy provision entity sets the policy information when the open service entity invokes the service, the open service entity applies the first obtaining method mentioned above, namely, receives the policy information from the policy provision entity passively. If the policy provision entity does not set the policy information when the open service entity invokes the service, the open service entity applies the second obtaining method above mentioned, namely, sends a policy request to the policy provision entity to obtain the policy information actively.

With the service selection method provided in this embodiment, the open service entity obtains, according to the service information carried in the service invoking request message, policy information corresponding to the service to be invoked, and selects, according to the policy information, a service provision entity to invoke the service, and therefore, a proper service is selected for the external application according to the policy, the services or capabilities of the communication network are invoked more conveniently and accurately, and the service continuity is ensured.

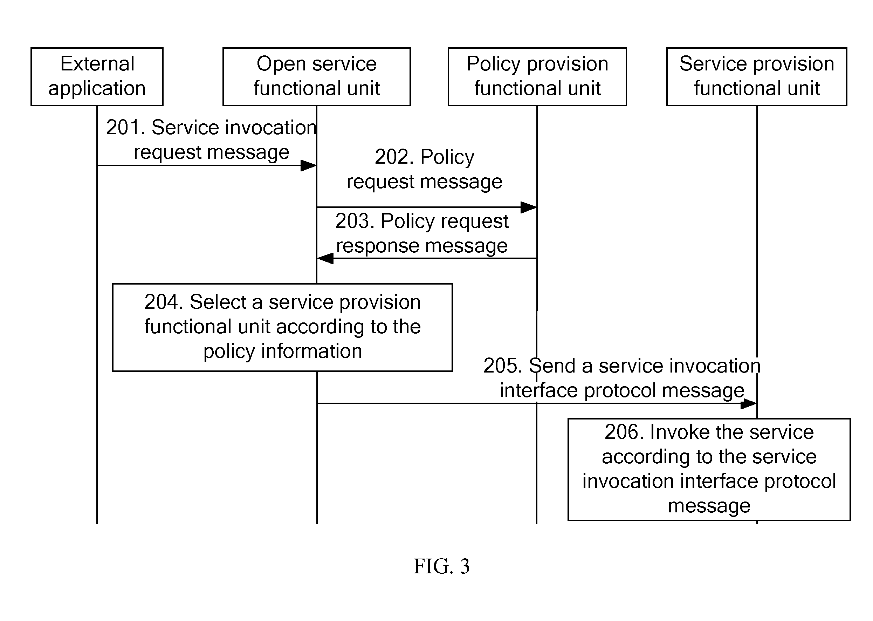

FIG. 3 is a signaling flowchart of a service selection method according to another embodiment of the present invention. As shown in FIG. 3, the service selection method provided in this embodiment shows more details about the previous embodiment, and includes the following steps:
Step 201: The external application sends a service invoking request message to an open service functional unit.

When the external application accesses the services or capabilities of the communication network through Web services, the external application sends a service invoking request message to the open service functional unit first. The service invoking request message carries service information about the service to be invoked. The service invoking request message is a SOAP message compliant with the Web service interface, or a message that takes on a REST style, for example, an HTTP Get request sent by a subscriber to the Web server when the subscriber browses a Web page.

Step 202: The open service functional unit sends a policy request message to the policy provision functional unit.

After receiving the service invoking request message, the open service functional unit judges that no policy information is preset by the policy provision functional unit or delivered to the open service functional unit. Therefore, the open service functional unit sends a policy request message to the policy provision functional unit, requesting policy information. If it is judged that the policy information is already preset by the policy provision functional unit and delivered to the open service functional unit actively, steps 202-203 are skipped, and the process proceeds to step 204 directly. The policy request message sent by the open service functional unit carries invoking information and service information. The invoking information may be information about the initiator of the external application that invokes the service, or information about the session parties involved in the service.

Step 203: The policy provision functional unit returns a policy response message to the open service functional unit.

The policy provision functional unit responds to the policy request message after receiving the policy request message. That is, the policy provision functional unit selects, according to the invoking information and the service information in the request, a proper policy for the service to be invoked, and then encapsulates the policy information into a policy response message and returns the policy response message to the open service functional unit.

Step 204: The open service functional unit selects a service provision functional unit according to the policy information.

The open service functional unit receives the policy response message returned by the policy provision functional unit. The policy response message carries the policy information corresponding to the service to be invoked. The open service functional unit selects a service provision functional unit according to the policy information. There may be more than one service provision functional unit. According to the policy information, the open service functional unit selects one of the service provision functional units to invoke the service. It should be noted that, there may be a special scenario that only one service provision functional unit exists, and the technical solution under the present invention is also applicable to this special scenario.

Step 205: The open service functional unit sends a service invoking interface protocol message to the service provision functional unit.

The open service functional unit selects one of the service provision functional units, and sends a service invoking interface protocol message to this service provision functional unit. The service invoking interface protocol message is defined by the service provision functional unit. A service invoking indication message carries service information.

Step 206: The service provision functional unit invokes the service according to the service invoking interface protocol message.

According to the received service invoking interface protocol message, the service provision functional unit selects the interface corresponding to the service provision functional unit, and completes the process of invoking the service indicated in the service information.

With the service selection method provided in this embodiment, the open service functional unit obtains, according to the service information carried in the service invoking request message, policy information corresponding to the service to be invoked, and selects, according to the policy information, a service provision functional unit to invoke the service, and therefore, a proper service is selected for the external application according to the policy, the services or capabilities of the communication network are invoked more conveniently and accurately, and the service continuity is ensured.

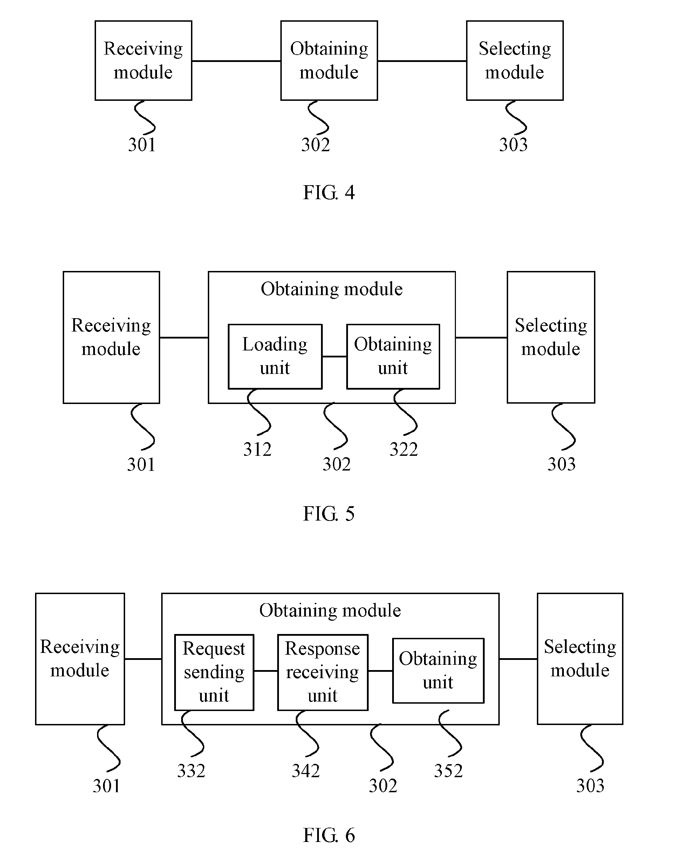

FIG. 4 is a schematic diagram showing a structure of an open service entity according to an embodiment of the present invention. As shown in FIG. 4, the open service entity provided in this embodiment includes: a receiving module 301, an obtaining module 302, and a selecting module 303. The receiving module 301 is configured to receive a service invoking request message sent by an external application, where the service invoking request message carries service information about a service to be invoked. When an external application accesses a service or capability of a communication network through Web services, the external application sends a service invoking request message to the receiving module 301 of the open service entity first. The receiving module 301 receives the service invoking request message sent by the external application. The service invoking request message carries service information about the service to be invoked. The service information may be any information about the service to be invoked. For example, when the external application expects to invoke a call service, the service information is call service information, the identifier of the calling party, and the identifier of the called party. The obtaining module 302 is configured to obtain, according to the service information received by the receiving module 301, the policy information corresponding to the service to be invoked. If the service information shows that two or more services are currently available, the obtaining module 302 selects the most suitable service for the external application according to certain policies.

The policy information may be preset by the policy provision entity. Before receiving the service invoking request message sent by the external application, the open service entity pre-stores the policies actively delivered by the policy provision entity as static policy information, which will be retrieved when necessary. If no policy information is preset by the policy provision entity and no policy is available for selection, the open service entity sends a policy request to the policy provision entity to obtain the policy information. The selecting module 303 is configured to select, according to the policy information obtained by the obtaining module 302, a service provision entity to invoke the service.

In the case that the policy information is preset by the policy provision entity and delivered to the open service entity actively, the open service entity has another structure. FIG. 5 is a schematic diagram showing a structure of an open service entity according to another embodiment of the present invention, where the obtaining module 302 may include a loading unit 312 and an obtaining unit 322. The loading unit 312 is configured to load the policy information preset by the policy provision entity. That is, before the service invoking request message is received from the external application, the loading unit loads the policy information preset by the policy provision entity, and stores the loaded policy information. After the service invoking request message is received, the stored policy information can be retrieved anytime, and the policy information corresponding to the service to be invoked can be selected. The obtaining unit 322 is configured to obtain, according to the service information received by the receiving module 301 and the policy information loaded by the loading unit 312, the policy information corresponding to the service to be invoked. The selecting module 303 is configured to select, according to the policy information obtained by the obtaining unit 322, a service provision entity to invoke the service.

In the case that the service provision entity requests the policy information from the policy provision entity actively, the open service entity has another structure. FIG. 6 is a schematic diagram showing a structure of an open service entity according to another embodiment of the present invention, where the obtaining module 302 may include a request sending unit 332, a response receiving unit 342, and an obtaining unit 352. The request sending unit 332 is configured to send, according to the service information received by the receiving module 301, a policy request message that carries service information, to the policy provision entity; the response receiving unit 342 is configured to receive a policy response message sent by the policy provision entity, where the policy response message carries the policy information corresponding to the service to be invoked; and the obtaining unit 352 is configured to obtain the policy information according to the policy response message received by the response receiving unit. The selecting module 303 is configured to select, according to the policy information obtained by the obtaining unit 352, a service provision entity to invoke the service.

Further, the interface protocol between the open service entity and the policy provision entity is the Simple Object Access Protocol (SOAP), the Extensible Markup Language Application Programming Interface (XML API) protocol, the Diameter protocol, or the Hyper Text Markup Language (HTML) protocol.

In an open service entity provided in this embodiment, the obtaining module obtains, according to the service information carried in the service invoking request message, policy information corresponding to the service to be invoked, and the selecting module selects, according to the policy information, a service provision entity to invoke the service, and therefore, a proper service is selected for the external application according to the policy, the services or capabilities of the communication network are invoked more conveniently and accurately, and the service continuity is ensured.

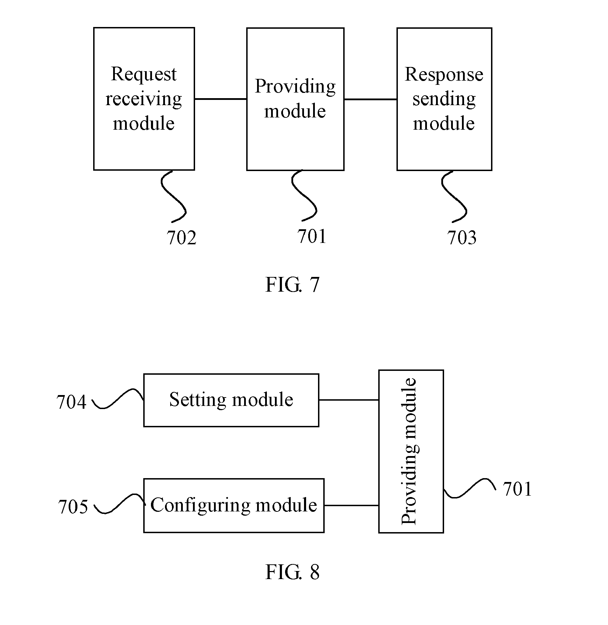

FIG. 7 is a schematic diagram showing a structure of a policy provision entity according to an embodiment of the present invention. As shown in FIG. 7, the policy provision entity in this embodiment includes: a providing module 701, configured to provide policy information for the open service entity. In the case that no policy information is preset by the policy provision entity, the open service entity sends a policy request message to the policy provision entity to request the policy information, and the policy provision entity in this embodiment may further include a request receiving module 702 and a response sending module 703. The request receiving module 702 is configured to receive the policy request message sent by the open service entity, where the policy request message carries invoking information and service information; and the response sending module 703 is configured to return a policy response message that carries the policy information, to the open service entity.

In the case that the policy provision entity presets the policy information and delivers the policy information to the open service entity actively, the policy provision entity may have another structure. FIG. 8 is a schematic diagram showing a structure of a policy provision entity according to another embodiment of the present invention. The policy provision entity in this embodiment may further include: a configuring module 705, configured to preset policy information; and a providing module 701, configured to provide, according to the policy information preset by the configuring module 705, the open service entity with the policy information corresponding to the service to be invoked. Further, the policy provision entity may include: a setting module 704, configured to set priority information of the policy information. The providing module 701 provides, according to the policy information preset by the configuring module 705 and the priority information of the policy information, the open service entity with the policy information corresponding to the service to be invoked. Through a policy provision entity provided in this embodiment, the policy provision entity delivers the policy information to the open service entity actively, or the open service entity requests the policy information from the service provision entity. Therefore, the open service entity can select a proper service for the external application according to the policy information, invoke the services or capabilities of the communication network more conveniently and accurately, and ensure service continuity.

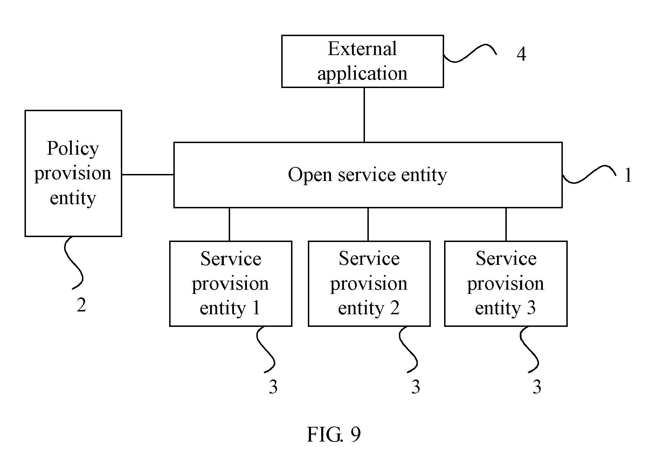

FIG. 9 is a schematic diagram showing a structure of a service selection system according to an embodiment of the present invention. As shown in FIG. 9, the service selection system provided in this embodiment includes an open service entity 1 and a policy provision entity 2. The open service entity 1 is configured to: obtain, according to service information, policy information corresponding to a service to be invoked, select a service provision entity 3 according to the policy information corresponding to the service to be invoked, and instruct the service provision entity 3 to invoke the service. The open service entity 1 provides capabilities or services opened by different operators and different types of networks for the external application 4 through a standard Web service interface. In this embodiment, the open service entity 1 may be an open capability gateway defined by the Parlay/OSA, or an SDP defined by the BEA/Oracle, or another device that provides capabilities or services of the communication network. The policy provision entity 2 is configured to provide the open service entity 1 with the policy information corresponding to the service to be invoked. The policy provision entity 2 provides policy support for the service selection of the open service entity 1. The policy information may be based on the subscription information of the initiator of the external application 4, or the service home information of session parties involved in the service in the communication network, or information about differences between service provision entities (such as charging information, and load information). The service provision entity 3 is located in a specific network, and provides services through a message interface. The service provision entity 3 may be a functional entity in a specific network. For example, for the Presence service in an IMS network, the service provision functional unit may be an AS of the Presence service. The service provision entity 3 may be a combination of multiple functional units in a specific network. For example, the charging function may be an Online Charging System (OCS) in the IMS network.

It should be noted that, in the service selection system provided in this embodiment, the open service entity may include any open service entity shown in FIG. 4 to FIG. 6; and the policy provision entity may include any policy provision entity shown in FIG. 7 and FIG. 8.

The interface protocol between the open service entity 1 and the policy provision entity 2 is SOAP, XML API, Diameter, or HTTP. The interface between the open service entity 1 and the policy provision entity 2 may be a direct interface or an indirect interface or even an internal interface, namely, the policy provision entity 2 and the open service entity 1 are located in the same physical entity. The interface may be a SOAP interface, an XML API interface, a Diameter interface, or an HTTP interface.

The interface protocol between the open service entity 1 and the service provision entity 3 is the protocol corresponding to the network that provides the service to be invoked, namely, the interface protocol depends on the network that provides the service to be invoked. The interface between the service provision entity 3 and the open service entity 1 depends on the service provision network. For example, if the service provision network is a PSTN, the interface is an INAP interface; if the service provision network is a PSTN or IMS network, the interface is a SIP or HTTP interface.

The interface protocol between the open service entity 1 and the external application 4 is SOAP or a protocol compliant with the REST style. This interface is a Web service interface, such as a SOAP interface, or a REST interface.

With the service selection system provided in this embodiment, the external application sends a service invoking request message that carries service information; the open service entity obtains, from the policy provision entity and according to the received service information, policy information corresponding to the service to be invoked, and selects, according to the policy information, a service provision entity to invoke the service, and therefore, a proper service is selected for the external application according to the policy, the services or capabilities of the communication network are invoked more conveniently and accurately, and the service continuity is ensured.

Finally, it should be noted that, the above embodiments are merely provided for describing the technical solutions of the present invention, but not intended to limit the present invention. It is apparent that persons skilled in the art can make various modifications and variations to the invention. The present invention is intended to cover the modifications and variations provided that they fall within the scope of protection defined by the following claims or their equivalents.

## Claims

1. A service selection method, applied in an Open Service Architecture (OSA), wherein the method comprises:
receiving a service invoking request message sent by an external application, wherein the service invoking request message carries service information about a service to be invoked;
obtaining, according to the service information, policy information corresponding to the service to be invoked; and
selecting, according to the policy information, a service provision entity to invoke the service.

2. The method according to claim 1, further comprising:
loading the policy information which is provided by a policy provision entity beforehand.

3. The method according to claim 1, wherein the obtaining, according to the service information, the policy information corresponding to the service to be invoked comprises:
sending a policy request message to a policy provision entity according to the service information, wherein the policy request message carries invoking information and the service information; and
obtaining the policy information according to a received policy request response message.

4. The method according to claim 1, wherein the obtaining, according to the service information, the policy information corresponding to the service to be invoked is:
obtaining, according to a preset priority of the policy information and the service information, the policy information corresponding to the service to be invoked.

5. The method according to any one of claims 1-4, further comprising:
sending a service invoking interface protocol message, defined by the service provision entity, to the service provision entity, wherein the service provision entity invokes the service according to the received service invoking interface protocol message.

6. An open service entity, applied in an Open Service Architecture (OSA), wherein the open service entity comprises:
a receiving module, configured to receive a service invoking request message sent by an external application, wherein the service invoking request message carries service information about a service to be invoked;
an obtaining module, configured to obtain, according to the service information received by the receiving module, policy information corresponding to the service to be invoked; and
a selecting module, configured to select, according to the policy information obtained by the obtaining module, a service provision entity to invoke the service.

7. The open service entity according to claim 6, wherein the obtaining module comprises:
a loading unit, configured to load the policy information preset by a policy provision entity; and
an obtaining unit, configured to obtain, according to the service information received by the receiving module and the policy information loaded by the loading unit, the policy information corresponding to the service to be invoked.

8. The open service entity according to claim 6, wherein the obtaining module comprises:
a request sending unit, configured to send, according to the service information received by the receiving module, a policy request message that carries the service information, to a policy provision entity;
a response receiving unit, configured to receive a policy response message sent by the policy provision entity, wherein the policy response message carries the policy information corresponding to the service to be invoked; and
an obtaining unit, configured to obtain the policy information according to the policy response message received by the response receiving unit.

9. The open service entity according to claim 7, wherein:
an interface protocol between the open service entity and the policy provision entity is the Simple Object Access Protocol (SOAP), the Extensible Markup Language Application Programming Interface (XML API) protocol, the Diameter protocol, or the Hyper Text Markup Language (HTML) protocol.

10. A policy provision entity, applied in an Open Service Architecture (OSA), wherein the policy provision entity comprises:
a providing module, configured to provide policy information for an open service entity.

11. The policy provision entity according to claim 10, further comprising:
a request receiving module, configured to receive, from the open service entity, a policy request message that carries invoking information and service information, wherein the providing module provides the policy information for the open service entity according to the invoking information and the service information; and
a response sending module, configured to return a policy response message to the open service entity, wherein the policy response message carries the policy information provided by the providing module.

12. The policy provision entity according to claim 10, further comprising:
a configuring module, configured to preset the policy information, wherein the providing module provides, according to the policy information preset by the configuring module, the open service entity with the policy information corresponding to the service to be invoked.

13. The policy provision entity according to claim 12, further comprising:
a setting module, configured to set priority information of the policy information, so that the providing module can provide, according to the policy information configured by the configuring module and the priority information of the policy information, the open service entity with the policy information corresponding to the service to be invoked.

14. A service selection system, applied in an Open Service Architecture (OSA), comprising:
an open service entity, configured to: obtain, from a policy provision entity and according to service information, policy information corresponding to a service to be invoked, select a service provision entity according to the policy information corresponding to the service to be invoked, and instruct the service provision entity to invoke the service; and
the policy provision entity, configured to provide the policy information for the open service entity.
